# EUROPEAN PATENT APPLICATION

(11) **EP 0 689 204 A2**
(43) Date of publication of application: **27.12.1995**
(21) Application number: 95303480.8
(22) Date of filing: 24.05.1995
(51) Int. Cl.: G11B 11/10

(54) **Magneto-optical recording apparatus capable of erasing/writing or direct overwriting in dependence on the medium type**

(30) Priority: 26.05.1994 JP 112392/94
(71) Applicant: CANON KABUSHIKI KAISHA, Tokyo (JP)
(72) Inventor: Kimura, Shunpei, c/o Canon K.K., Ohta-ku, Tokyo (JP)
(74) Representative: Beresford, Keith Denis Lewis

(57) **Abstract**

In recording of information, a light beam which is intensity-modulated in accordance with a recording signal is applied to a magneto-optical recording medium. A bias magnetic field is applied onto the irradiated portion of the light beam on the recording medium. It is detected whether the recording medium is an overwritable medium or not. In accordance with the detection result, the modulation condition of the light beam intensity and the direction of the bias magnetic field is changed.

## Description

The present invention relates to a magneto-optical recording apparatus which thermomagnetically records information on a magneto-optical recording medium, and reads out information by utilizing a magneto-optical effect such as a magnetic Kerr effect.

Conventionally, a magneto-optical memory is known as an erasable optical memory, and is put into practical applications. A magneto-optical recording method using the magneto-optical memory has an advantage of high-density, non-contact recording/reproduction on an information recording surface, as compared to a conventional magnetic recording method using only a magnetic head. However, since the state of only a portion where heat is applied (a portion irradiated with a light beam) changes, previous information on a medium must be erased (the medium must be uniformly magnetized in one direction) prior to recording, resulting in a low recording speed. In order to solve this problem, erasure and recording may be simultaneously performed by different optical heads. However, this method complicates the apparatus and increases cost.

Thus, overwrite methods capable of overwriting new information on previously recorded old information without requiring any erasure process have been developed (U.S.P. Nos. 5,132,945, 4,878,132, and the like). As one of the overwrite methods, an optical modulation overwrite method which uses a magneto-optical recording medium consisting of an exchange-coupled multi-layered film and performs an overwrite operation by changing the power of a light beam to be irradiated is known. In this optical modulation overwrite method, two different laser powers P_{H} and P_{L} are used upon overwrite recording, an erasure process is executed using relatively low laser power P_{L}, and a recording process (formation of a magnetic wall) is executed using relatively high laser power P_{H}.

In this specification, a medium which can be subjected to an overwrite operation by the above-mentioned optical modulation overwrite method will be referred to as an overwrite medium, and a medium which cannot be subjected to an overwrite operation by the optical modulation overwrite method, and requires an erasure process before information recording will be referred to as an erase/write medium. The erase/write medium is popularly commercially available as a magneto-optical disk.

In the future, the spread of the optical modulation overwrite method is expected. In this case, the overwrite medium is preferably capable of recording by a method having an erasure process executed in addition to a recording process using a currently commercially available recording apparatus. Similarly, the erase/write medium is preferably capable of recording using a recording apparatus (overwrite recording apparatus) based on the optical modulation overwrite method. As will be described later, since the laser power required upon execution of overwrite recording on the overwrite medium is higher than that required upon execution of erase/write recording on the erase write recording, it is easy to perform recording on the erase/write medium in a normal erase/write process using the overwrite recording apparatus.

Upon execution of normal erase/write recording on an optical modulation overwrite recording medium, a method of performing erasure by irradiating a laser beam with low power P_{L} onto a medium in a DC manner, and performing recording by modulating a laser beam with high power P_{H} in accordance with a recording signal may be proposed. However, with this recording method, since the relatively high laser power P_{H} assumes a considerably large value, a currently commercially available recording apparatus for the erase/write medium cannot provide sufficient laser power, and it is difficult to realize this method.

In order to decrease laser power required upon recording, the following method is known. In this method, a laser beam with high power P_{H} is irradiated in a DC manner to perform recording in a stripe pattern (to form a magnetic wall) (this process is considered as an erasure process), erasure is performed (to erase the magnetic wall) by modulating a laser beam with low power P_{L} in accordance with a recording signal, and information is recorded by considering the erased portion as a recording pit (this method will be referred to as P_{L} recording hereinafter). With this P_{L} recording, since a laser beam with high power P_{H} need only be irradiated in a DC manner in the erasure process, the value of high power P_{H} can be substantially decreased as compared to a normal recording method which modulates a laser beam with high power P_{H}. When the P_{L} recording is executed, recording can be performed on the overwrite medium even in a recording apparatus for normal erase/write recording which does not comprise any high-power laser element. Note that the recording principle itself of P_{L} recording is based on the optical modulation overwrite method, but is different from the original optical modulation overwrite method in that the erasure and recording processes are separately performed without executing overwrite recording.

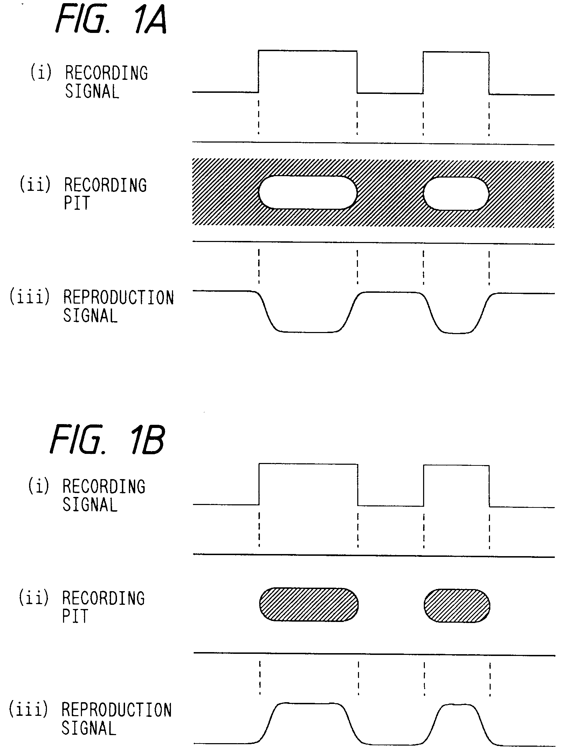

Figs. 1A and 1B are views for explaining the relationship among the recording signal, recording pit, and reproduction signal upon execution of recording on an overwrite medium. Fig. 1A shows a case wherein P_{L} recording is performed on the overwrite medium using an erase/write apparatus, and Fig. 1B shows a case wherein recording is performed on the overwrite medium using an overwrite recording apparatus based on the optical modulation overwrite method. Hatched portions in Figs. 1A and 1B represent recording pit portions obtained upon irradiation of a laser beam with high power P_{H}. As can be seen from Figs. 1A and 1B, recording pits are formed in reverse patterns in correspondence with an identical recording signal between the case wherein P_{L} recording is performed using the erase/write apparatus and the case wherein recording is performed using the overwrite apparatus, and hence, the reproduction signals from the two apparatuses have opposite polarities.

As described above, since the reproduction signals corresponding to an identical recording signal have opposite polarities between the case wherein recording is performed on the overwrite medium using the overwrite apparatus and the case wherein P_{L} recording is performed on the overwrite medium using the erase/write apparatus, the polarity of the reproduction signal must be inverted in correspondence with the recording medium to normally read out information. When both recording using the overwrite recording apparatus and recording using the erase/write recording apparatus are performed on a single overwrite medium, recording regions by the two methods are formed on the medium. In this case, since the recording methods of these regions cannot be discriminated from a reproduction signal, information cannot be normally read out from this medium. More specifically, when P_{L} recording is performed on the overwrite medium, compatibility between the erase/write recording apparatus and the overwrite recording apparatus cannot be assured.

It is an object of the present invention to assure compatibility between a recording apparatus (erase/write recording apparatus) for performing recording on an overwrite medium by P_{L} recording, and a recording apparatus based on an overwrite method.

In order to achieve the above object, there is provided a magneto-optical recording apparatus for performing recording on a magneto-optical recording medium in accordance with a recording signal, comprising: a light source for irradiating a light beam onto the medium; bias magnetic field applying means for applying a bias magnetic field onto the irradiation position of the light beam on the medium; detection means for detecting whether the medium is an overwrite incapable medium or an overwrite capable medium; and changing means for changing an intensity of the light beam as a modulation condition and a direction of the bias magnetic field in accordance with the detection result of the detection means.

In order to achieve the above object, there is also provided a magneto-optical recording method for performing recording on a magneto-optical recording medium in accordance with a recording signal, comprising the steps of: irradiating a light beam which is intensity-modulated in accordance with the recording signal onto the medium; applying a bias magnetic field onto the irradiation position of the light beam on the medium; detecting whether the medium is an overwrite incapable medium or an overwrite capable medium; and changing an intensity of the light beam as a modulation condition and a direction of the bias magnetic field in accordance with the detection result in the detecting step.

The above and other objects, features, and advantages of the invention will become apparent from the following detailed description of the embodiments of the invention which are described by way of example only with reference to the accompanying drawings in which:
Figs. 1A and 1B are explanatory views for explaining a recording process on an overwrite medium by conventional methods, in which Fig. 1A shows a case wherein P_{L} recording is performed by an erase/write recording apparatus, and Fig. 1B shows a case wherein overwrite recording is performed by an optical modulation overwrite apparatus;
Fig. 2 is a diagram showing the arrangement of a magneto-optical recording/reproduction apparatus according to the first embodiment of the present invention;
Fig. 3 is a plan view showing the arrangement of a cartridge used in the first embodiment;
Figs. 4A and 4B are views for respectively explaining recording processes on an erase/write medium and an overwrite medium in the apparatus of the first embodiment;
Fig. 5A is a plan view showing a magneto-optical recording medium used in the second embodiment of the present invention, and Fig. 5B is a view for explaining the format of a disk information recording region; and
Fig. 6 is a diagram showing the arrangement of a magneto-optical recording/reproduction apparatus according to the second embodiment of the present invention.

In order to assure compatibility, the polarity of a reproduction signal must not be inverted on each of an erase/write medium and an overwrite medium independently of the types of recording apparatuses which have performed recording. In an apparatus of the present invention, whether a magneto-optical recording medium is an overwrite medium (in the present invention, an optical modulation overwrite medium will be simply referred to as an overwrite medium hereinafter) or an erase/write medium is detected, and the laser beam intensity as a modulation condition and the direction of a bias magnetic field are changed in correspondence with the detection result. For this reason, recording can be performed without causing inversion of the polarity of a recording medium, and compatibility between recording apparatuses can be assured in units of media.

When recording is performed on an overwrite medium using a conventional erase/write apparatus, the P_{L} recording method is used, as described above. In the present invention, an indication portion for indicating an overwrite or erase/write medium is provided on the medium side in a certain format, and an overwrite recording apparatus detects the overwrite or erase/write medium using this indication portion. Upon detection of the overwrite medium, the direction of a magnetic field to be applied is set in the erase direction in the conventional erase/write recording apparatus, a recording signal is inverted to have a phase opposite to that of a recording signal upon P_{L} recording, and a light source (a semiconductor laser element, or the like) is driven based on this recording signal so as to attain overwrite recording. With this arrangement, reproduction signals obtained upon execution of both P_{L} recording using the erase/write apparatus and overwrite recording using the overwrite apparatus on a single overwrite medium have a single polarity, and this polarity of the reproduction signal coincides with those obtained when recording is performed on an erase/write medium using the erase/write recording apparatus and when erase/write recording is performed on an erase/write medium using the overwrite recording apparatus. In other words, recording/reproduction compatibility can be assured. The P_{L} recording in the erase/write recording apparatus will be explained in detail below. Upon execution of recording on an overwrite medium, an erasure process is performed by irradiating a laser beam with relatively high laser power P_{H} while applying a magnetic field in the erase direction of a normal erase/write medium. In a recording process, the direction of the magnetic field to be applied is reversed, and a laser beam with relatively low power P_{L} is irradiated while being modulated in accordance with a recording signal.

More specifically, in a magneto-optical recording apparatus of the present invention, when an erase/write medium is to be used, predetermined erase/write recording is performed; when an overwrite medium is used, overwrite recording is performed in such a manner that the polarity of the recording signal is inverted from that for the erase/write medium to drive the light source at a phase timing opposite to that for the erase/write medium, and the direction of a bias magnetic field to be applied is set in the erase direction in the predetermined erase/write recording.

The preferred embodiments of the present invention will be described in detail below with reference to the accompanying drawings.

### (First Embodiment)

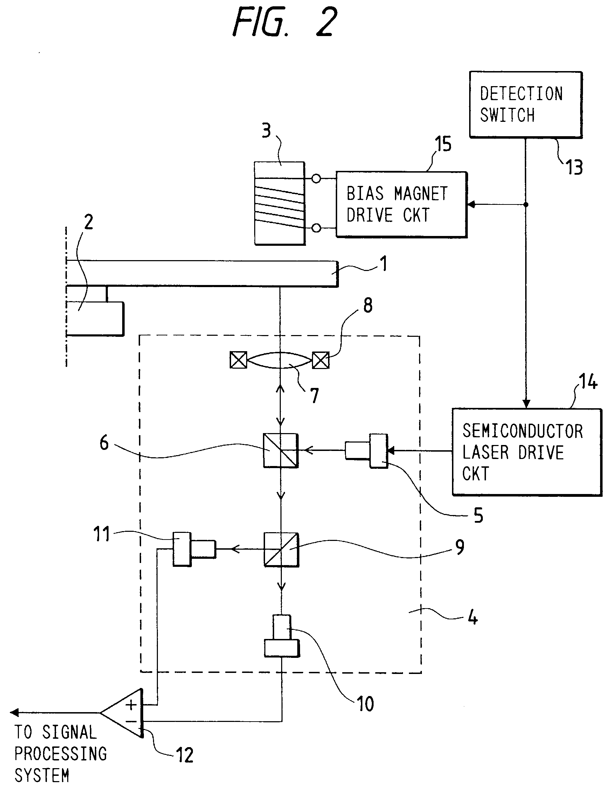

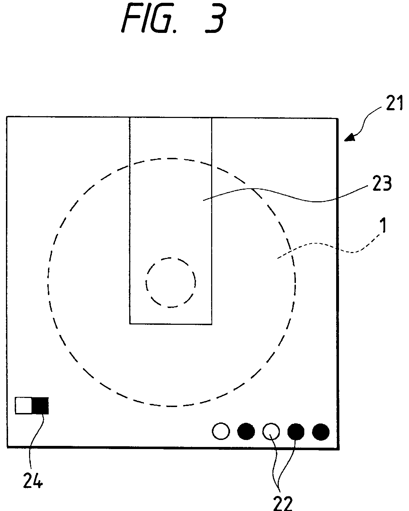

Fig. 2 is a diagram showing the arrangement of a magneto-optical recording/reproduction apparatus according to the first embodiment of the present invention. This magneto-optical recording/reproduction apparatus is used for performing recording and reproduction of information on and from a magneto-optical disk 1 as a magneto-optical recording medium, and can generate laser power sufficient for execution of the -optical modulation overwrite method. As will be described later, the magneto-optical disk 1 is stored in a cartridge 21 (see Fig. 3).

A spindle motor 2 which holds the magneto-optical disk 1 and rotates it at a predetermined speed is arranged. A bias magnet 3 for applying a bias magnetic field onto the magneto-optical disk 1 upon execution of recording/erasure is arranged on the upper surface side (Fig. 2) of the magneto-optical disk 1, and an optical head 4 for irradiating an information recording/reproduction laser beam onto the magneto-optical disk 1 and detecting light irradiated onto and reflected by the magneto-optical disk 1 is arranged at a position opposing the bias magnet 3 to sandwich the magneto-optical disk 1 therebetween.

The optical head 4 comprises a semiconductor laser 5 as a light source, a polarization beam splitter 6 for splitting a laser beam to be irradiated onto the magneto-optical disk 1 and a laser beam reflected by the magneto-optical disk 1 with respect to a laser beam emitted by the semiconductor laser 5, an objective lens 7 for focusing the laser beam emitted by the semiconductor laser 5 and forming a small light spot on the magneto-optical disk 1, an actuator 8 for driving the objective lens 7 in the tracking and focusing directions, a polarization beam splitter 9 for splitting the laser beam reflected by the magneto-optical disk 1 into two light beams, and two photosensors 10 and 11 for respectively detecting the two light beams split by the polarization beam splitter 9. The optical head 4 has an integrated structure of these components. A tracking control circuit and a focusing circuit (neither are shown) are arranged. When the actuator 8 is controlled on the basis of a tracking error signal and a focusing error signal detected by these control circuits, focusing control for focusing a light spot of a laser beam from the semiconductor laser 5 on the medium surface and tracking control for tracking the light spot along an information track are realized.

A differential amplifier 12 receives detection signals from the two photosensors 10 and 11, and reproduces a difference component between these detection signals as a magneto-optical signal. The output from the differential amplifier 12 is supplied to a signal processing system (not shown).

Furthermore, the magneto-optical recording/reproduction apparatus comprises a detection switch 13 which engages with a disk type indication portion 22 provided on the cartridge 21 to detect whether the magneto-optical disk 1 is an erase/write or overwrite medium, a semiconductor laser drive circuit 14 for determining the polarity of a recording signal in correspondence with the discrimination result of the detection switch 13 and driving the semiconductor laser 5, and a bias magnet drive circuit 15 for driving the bias magnet 3 so that the direction of a magnetic field to be applied is reversed in correspondence with the discrimination result of the detection switch 13. More specifically, when the magneto-optical disk 1 is an erase/write medium, the semiconductor laser 5 is driven on the basis of a recording signal which is not inverted, and a bias magnetic field is applied to the magneto-optical disk in the same polarity as that in normal erase/write recording, thus attaining erase/write recording. On the other hand, when the magneto-optical disk 1 is an overwrite medium, the polarity of a recording signal is inverted, the semiconductor laser 5 is driven based on the recording signal at the opposite phase timing (i.e., the intensity modulation of the laser beam is performed in an opposite phase), and the direction of the bias magnetic field is set in the erase direction for the erase/write medium, thus attaining optical modulation overwrite recording.

The cartridge 21 which stores the magneto-optical disk 1 will be described below with reference to Fig. 3. The cartridge 21 is substantially the same as a commercially available one with a shutter 23 and a write protect notch 24, except that it has the disk type indication portion 22. In this embodiment, the disk type indication portion 22 is constituted by a predetermined number of circular indication portions formed on the surface of the cartridge 21 to indicate predetermined information in correspondence with the combination of open/closed indication portions. In Fig. 3, full circles indicate open indication portions, and open circles indicate closed indication portions. The combination of the open and closed indication portions represents whether the magneto-optical disk 1 in the cartridge 21 is an overwrite or erase/write medium. The detection switch 13 of the magneto-optical recording/reproduction apparatus contacts the indication portions of the disk type indication portion 22 to detect open indication portions, thereby discriminating whether the disk 1 is an overwrite or erase/write medium.

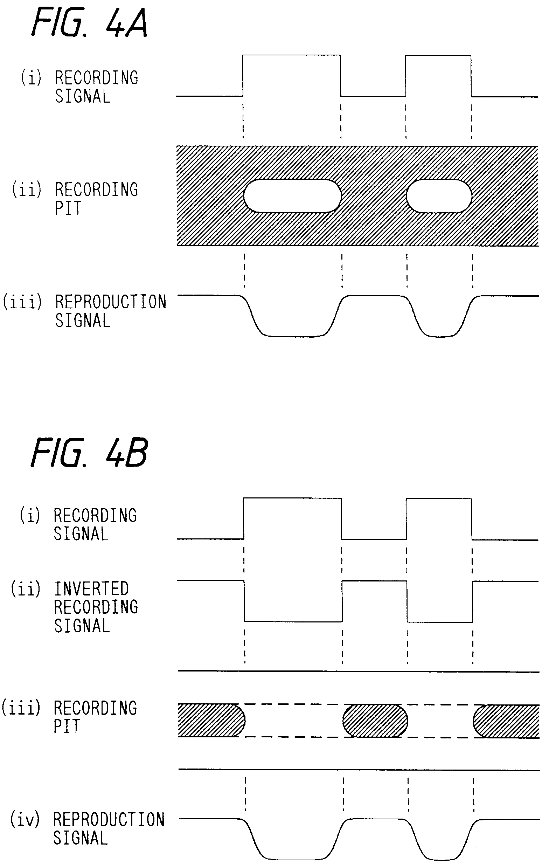

The recording process of the apparatus of this embodiment will be explained below. Fig. 4A shows the relationship among the recording signal, recording pit, and reproduction signal upon execution of recording on an erase/write medium, and Fig. 4B shows the relationship among the recording signal, inverted recording signal, recording pit, and reproduction signal upon execution of recording on an overwrite medium.

When erase/write recording is performed on an erase/write medium, since the semiconductor laser 5 is driven based on a recording signal itself, recording pits are formed in an erased region (a hatched region in Fig. 4A), as shown in Fig. 4A. On the other hand, when recording is performed on an overwrite medium, since recording is performed based on an inverted recording signal, recording pits are formed, as shown in Fig. 4B. The formed recording pits shown in Fig. 4B have a polarity opposite to that of recording pits formed by the conventional overwrite recording apparatus shown in Fig. 1B.

Upon comparison of reproduction signals corresponding to an identical input recording signal, a reproduction signal (Fig. 4A) from the erase/write medium recorded by the apparatus of this embodiment, a recording signal (Fig. 4B) from the overwrite medium recorded by the apparatus of this embodiment, and a reproduction signal (Fig. 1A) from an overwrite medium, which is subjected to P_{L} recording using an erase/write recording apparatus, all agree with each other, and these reproduction signals also coincide with a reproduction signal from an erase/write medium which is subjected to normal erase/write recording using an erase/write recording apparatus, although not shown. Therefore, compatibility of media between different recording apparatuses can be assured.

### (Second Embodiment)

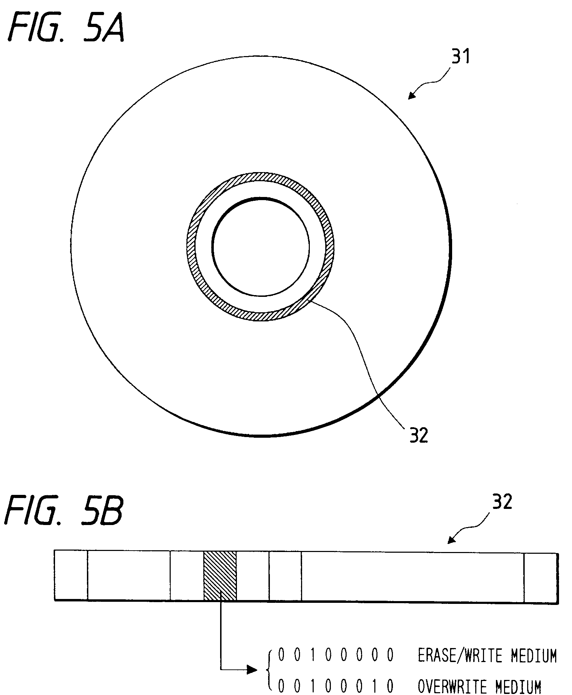

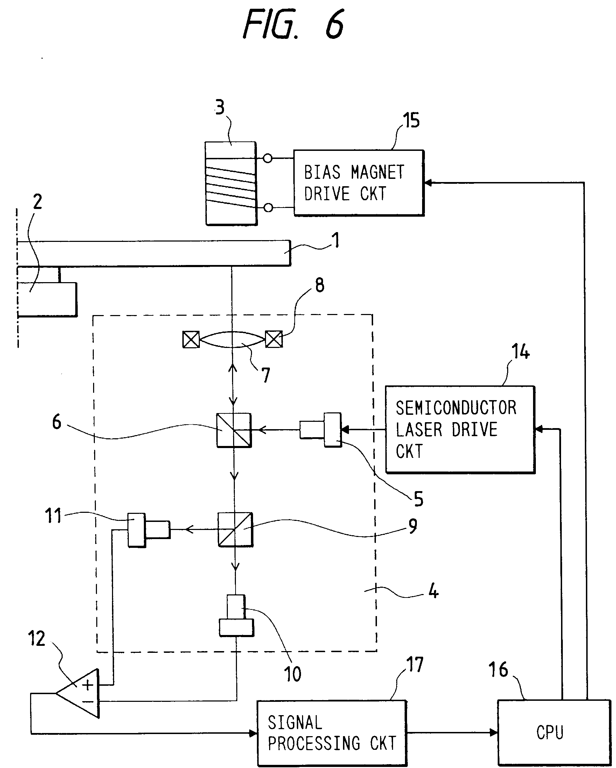

The second embodiment of the present invention will be described below with reference to Figs. 5A and 5B, and Fig. 6. In this embodiment, the type of medium is discriminated based on information indicating an erase/write or overwrite medium, which is recorded on a disk information recording region 32 on a magneto-optical disk 31, in place of the disk type indication portion on the cartridge.

On the doughnut-shaped magneto-optical disk 31 shown in Fig. 5A, the disk information recording region 32 is allocated on the innermost peripheral portion of the disk. The disk information recording region 32 is a region where various kinds of information such as a manufacturing lot number and the like are written upon manufacture, and has a format so that the information can be read out in a common read-out procedure independently of the types of media. In this embodiment, as shown in Fig. 5B, when, for example, information "00100000" is recorded in a specific portion (hatched portion in Fig. 5B) in the disk information recording region 32, it indicates that the medium is an erase/write medium; when information "00100010" is recorded in this portion, it indicates that the medium is an overwrite medium.

A magneto-optical recording/reproduction apparatus of this embodiment will be described below with reference to Fig. 6. This magneto-optical recording/reproduction apparatus has substantially the same arrangement as that of the magneto-optical recording/reproduction apparatus of the first embodiment shown in Fig. 2, except that a signal processing circuit 17 for receiving the output from the differential amplifier 12, and a CPU 16 for receiving the output from the signal processing circuit 17 and discriminating the type of medium are arranged in place of the detection switch, and the semiconductor laser drive circuit 14 and the bias magnet drive circuit 15 are controlled by the CPU 16.

A signal reproduced from the disk information recording region 32 on the magneto-optical disk 31 is input to the signal processing circuit 17 via the differential amplifier 12, and is converted into a digital signal. The digital signal is supplied to the CPU 16. The CPU 16 discriminates based on the input data whether or the recording medium is an erase/write medium or an overwrite medium, and determines the polarity of a recording signal to be supplied to the semiconductor laser drive circuit 14 and the application direction of the bias magnetic field in accordance with the discrimination result. As a result, as in the first embodiment, when the medium is an erase/write medium, the semiconductor laser 5 is driven on the basis of a recording signal which is not inverted, and the bias magnetic field is applied in the same polarity as that in normal erase/write recording to attain erase/write recording; when the medium is an overwrite medium, the polarity of a recording signal is inverted, the semiconductor laser 5 is driven based on the recording signal at the opposite phase timing, the direction of the bias magnetic field is set in the erase direction for the erase/write medium, thus performing overwrite recording. Therefore, as in the first embodiment, an identical reproduction signal can be obtained in correspondence with an identical recording signal independently of the types of media or recording apparatuses, and compatibility can be assured.

In the first and second embodiments described above, since the overwrite medium and the erase/write medium have recording films with different layer structures and also have different recording sensitivities (the overwrite medium has lower sensitivity), the intensity itself of a laser beam must be changed (the intensity must be increased for the overwrite medium).

## Claims

1. A magneto-optical recording apparatus for performing recording on a magneto-optical recording medium in accordance with a recording signal, comprising:
a light source for irradiating a light beam onto the medium;
bias magnetic field applying means for applying a bias magnetic field onto the irradiation position of the light beam on the medium;
detection means for detecting whether the medium is an overwrite incapable medium or an overwrite capable medium; and
changing means for changing an intensity of the light beam as a modulation condition and a direction of the bias magnetic field in accordance with the detection result of said detection means.

2. An apparatus according to claim 1, wherein said changing means sets an intensity modulation phase of the light beam for the overwrite capable medium to be opposite to an intensity modulation phase of the light beam for the overwrite incapable medium.

3. An apparatus according to claim 1, wherein said changing means sets the direction of the bias magnetic field for the overwrite capable medium to be opposite to the direction of the bias magnetic field for the overwrite incapable medium.

4. An apparatus according to claim 1, wherein said detection means performs the detection on the basis of type information pre-recorded on the medium.

5. An apparatus according to claim 1, wherein the medium is stored in a cartridge, and said detection means performs the detection on the basis of type information provided in advance on the cartridge.

6. An apparatus according to claim 1, wherein the overwrite capable medium is a medium which allows an overwrite operation by optical modulation.

7. A magneto-optical recording method for performing recording on a magneto-optical recording medium in accordance with a recording signal, comprising the steps of:
irradiating a light beam which is intensity-modulated in accordance with the recording signal onto the medium;
applying a bias magnetic field onto the irradiation position of the light beam on the medium;
detecting whether the medium is an overwrite incapable medium or an overwrite capable medium; and
changing an intensity of the light beam as a modulation condition and a direction of the bias magnetic field in accordance with the detection result in the detecting step.

8. A magneto-optical recording medium including magneto-optical apparatus readable indicator means for indicating the form in which signals have been recorded and/or erased on or from the medium.

9. A magneto-optical reproducing apparatus for reproducing signals from a recording medium according to Claim 8.

10. A magneto-optical recording apparatus for recording signals on a magneto-optical recording medium including means for determining whether signals already recorded on the medium can be overwritten.
